# FASCICULE DE BREVET EUROPEEN

(11) **EP 2 632 829 B1**
(45) Date de publication et mention de la délivrance du brevet: **03.12.2014**
(21) Numéro de dépôt: 11832098.5
(22) Date de dépôt: 11.10.2011
(51) Int. Cl.: B65G 47/08, B65G 47/31

(54) **INSTALLATION POUR LA PREPARATION DE LOTS DE PRODUITS, DU GENRE FLACONS, BOUTEILLES OU AUTRES**
ANLAGE ZUR HERSTELLUNG VON PRODUKTCHARGEN IN PHIOLEN ODER FLASCHEN ODER ÄHNLICHEM
INSTALLATION FOR PREPARING BATCHES OF PRODUCTS, OF THE VIAL OR BOTTLE KIND OR THE LIKE

(30) Priorité: 28.10.2010 FR 1058908
(43) Date de publication de la demande: 04.09.2013
(73) Titulaire: C.E.R.M.E.X. CONSTRUCTIONS ETUDES ET RECHERCHES DE MATERIELS POUR L'EMBALLAGE D'EXPEDITION, 21910 Corcelles-les-Cîteaux (FR)
(72) Inventeur: VASSE, Michael, F-76930 Octeville-sur-Mer (FR); DANIERE, Lionel, F-76930 Octeville-sur-Mer (FR); CHOPLIN, Grégory, F-76930 Octeville-sur-Mer (FR)
(74) Mandataire: Eltzer, Thomas
(86) Numéro de dépôt international: PCT/FR2011/052371
(87) Numéro de publication internationale: WO 2012/056140

(56) Documents cités:
- EP-A1- 1 972 578
- WO-A1-2009/029646
- WO-A1-2010/037959

## Description

### DOMAINE TECHNIQUE DE L'INVENTION

La présente invention concerne une installation pour la préparation de lots de produits du genre flacons, bouteilles ou autres, en vue de leur conditionnement.

### ARRIERE-PLAN TECHNOLOGIQUE DE L'INVENTION

L'alimentation des machines dé conditionnement et d'emballage avec un flux continu de lots de produits peut s'effectuer de façon automatique au moyen d'une installation du type de celle qui est décrite, par exemple, dans la demande PCT publiée sous le n° WO 2010/037959, qui décrit une installation selon le préambule de la revendication 1.

Cette installation est utilisée pour préparer des lots à partir de produits qui ont une section circulaire ou ovale, du genre bouteilles ou autres, et elle comprend :
- un convoyeur amont qui amène, en continu, des produits disposés en file indienne dans des couloirs longitudinaux,
- un système de convoyage disposé en aval pour préparer les lots puis les transférer vers la machine de conditionnement et, entre les deux,
- une unité de régulation du flux de produits, laquelle unité comporte un dispositif de contrôle d'avancée et d'alignement transversal desdits produits afin de présenter un front ordonné au premier convoyeur aval qui réalise le dégroupage, lequel dispositif de contrôle d'avancée et d'alignement comprend un système de doigts de régulation, ou butées, qui, de façon cyclique, s'insèrent dans l'espace latéral disponible entre deux produits consécutifs d'une même file et qui avancent, de façon continue, à une vitesse qui est inférieure à celle dudit convoyeur aval de dégroupage.

L'installation précitée permet surtout de préparer des lots de produits qui sont, en eux-mêmes, relativement stables et suffisamment rigides pour former, en aval des doigts de régulation, un front qui est net, rectiligne dans le sens transversal, et qui permet au convoyeur aval de dégroupage de réaliser une opération de séparation de rangs de produits, de façon précise et sans échec. Ce genre d'installation est plutôt utilisé pour la préparation de lots dont la longueur est relativement modeste, limitée à deux ou trois produits, par exemple.

Sur ce type d'installation, la préparation de lots à partir de produits relativement souples est plus délicate du fait de la difficulté qu'il y a à réaliser un front bien ordonné en sortie de l'unité de régulation. En effet, les doigts de régulation poussent les rangs de produits vers la sortie de l'unité de régulation et, à cette sortie, une sole, ou tôle morte, fait la jonction entre les bandes sans fin de chaque module de convoyage et le tapis du convoyeur aval de dégroupage. Cette sole retient les produits et peut provoquer, dans la file, des déformations des produits au point de perturber leur alignement et de déstabiliser le front des produits.

La bande du module de convoyage avance à une vitesse qui est sensiblement égale à celle des doigts de régulation, voire légèrement inférieure, mais cette vitesse de la bande n'est pas véritablement contrôlée car ladite bande est soumise à des contraintes qui peuvent faire varier cette vitesse.

Ces variations de vitesse peuvent résulter des frottements et des contraintes dues à la pression des produits qui se situent en amont et en aval des doigts de régulation.

Mais ces contraintes peuvent aussi provenir du fait que l'adhérence des bandes sur leur poulie d'entraînement est aléatoire. En effet, il est courant d'utiliser des produits lubrifiants pour réduire le frottement entre les produits et les bandes de convoyage. Ces lubrifiants se répandent un peu partout, sur les poulies et les bandes, générant des phénomènes de glissement difficiles à contrôler et à maîtriser.

Or, de plus en plus souvent, compte tenu de l'amélioration des cadences et de l'apparition de nouveaux produits, qui sont parfois plus difficile à manipuler, les utilisateurs de ces machines de préparation de lots se trouvent confrontés à des difficultés qu'ils ne peuvent résoudre qu'en utilisant des machines spécifiques, adaptées à chaque cas, c'est-à-dire à un ou quelques types de produits seulement, selon leur taille, leur stabilité et leur capacité à conserver une forme compatible avec les organes de dégroupage.

Chaque machine fonctionne alors de façon intermittente, constituant une perte d'exploitation non négligeable pour l'entreprise possédante.

### DESCRIPTION GENERALE DE L'INVENTION

La présente invention propose une installation polyvalente qui offre la possibilité de choisir un mode de dégroupage des produits selon plusieurs critères et en particulier des critères qui sont liés à la nature des produits, à leur taille, leur constitution, et des critères qui sont liés à la forme et à la taille des lots à façonner avec ces différents produits.

L'installation de préparation de lots de produits, bouteilles ou autres, selon l'invention, comprend :
- un convoyeur amont qui amène des files de produits et un système de convoyage situé en aval comprenant un convoyeur aval de préparation qui est surmonté d'un convoyeur à barrettes ;
- une unité de régulation du flux de produits, interposée entre ledit convoyeur amont et ledit convoyeur aval, laquelle unité de régulation comporte des couloirs pour chaque file de produits, chaque couloir étant délimité par des parois qui sont guidées sur des glissières disposées transversalement, et, dans chaque couloir, un module de convoyage du type à bande sans fin et des jeux de doigts de régulation mobiles pour contrôler la vitesse d'avancement desdits produits, lesquels jeux de doigts sont répartis en deux familles imbriquées et commandées séparément par des organes moteurs appropriés pour permettre un réglage de l'écartement des jeux de doigts consécutifs et pour référencer lesdits produits, un support qui peut être guidé transversalement étant associé à chacun des modules de convoyage,
et selon une disposition essentielle de l'invention, la bande sans fin de chaque module de convoyage s'étend jusqu'à l'entrée dudit convoyeur aval, et des moyens de commande sont prévus pour régler séparément la vitesse de chacune des deux familles de jeux de doigts de régulation et pour régler, notamment, la vitesse dudit convoyeur aval, de façon à réaliser deux modes de dégroupage desdits produits : - un mode dénommé sélection par flux régulé (SFR) et - un mode dénommé sélection par doigts réglables (SDR).

Toujours selon l'invention, le brin actif supérieur de la bande sans fin du module de convoyage s'étend sur une longueur qui est de l'ordre de 2 à 3 fois la distance parcourue par un jeu de doigts pendant la phase où il est en saillie dans les couloirs de l'unité de régulation, au-dessus dudit brin actif.

Selon une autre disposition de l'invention, chaque module de convoyage comprend un premier sabre, la bande sans fin de chaque module de convoyage s'enroulant sur le premier sabre du même module et le tapis du convoyeur aval s'enroulant sur un deuxième sabre, de façon à limiter les risques de déstabilisation et de déséquilibrage des produits lorsqu'ils passent de ladite bande audit tapis.

Toujours selon l'invention, la bande sans fin de chaque module de convoyage se présente sous la forme d'une courroie crantée, laquelle courroie crantée est entraînée par une poulie crantée également afin de garantir la vitesse Vc de progression des produits lorsque, dans l'un des modes de dégroupage, ils sont libérés par le jeu de doigts correspondant, dans la partie aval des couloirs de l'unité de régulation.

Selon une autre disposition de l'invention, ledit premier sabre situé à l'extrémité aval du module de convoyage est constitué d'un rouleau cranté de faible diamètre, ledit diamètre étant de l'ordre de 10 à 15 mm, offrant un rayon hors tout, avec la courroie, qui est de l'ordre de 7 mm.

Toujours selon l'invention, l'installation comporte, au niveau de chaque module de convoyage, une bande sans fin animée au moyen d'un servomoteur susceptible d'établir plusieurs vitesses d'avancement selon le mode de dégroupage prévu, et en particulier :
- dans un mode de dégroupage dénommé SFR, une vitesse Vc égale à la vitesse du jeu de doigts de régulation qui actif, est en position de retenue des produits, et inférieure à la vitesse Va du convoyeur aval, ledit convoyeur aval effectuant la séparation des rangs de produits et un cycleur à barrettes effectuant le regroupement éventuel desdits rangs pour former ledit lot de produits,
- ou, dans l'autre mode de dégroupage, dénommé SDR, une vitesse Vc supérieure à la vitesse Vd des jeux de doigts de régulation, et sensiblement égale à la vitesse Va dudit convoyeur aval, pour faire effectuer la séparation des lots qui sont délimités par la bande sans fin dudit module de convoyage, directement dans les couloirs de l'unité de régulation.

Selon une autre disposition de l'invention, chaque module de convoyage comporte, en amont de sa bande sans fin, un plan fixe, ou sole, pour réaliser la jonction entre l'extrémité aval du convoyeur amont et ladite bande sans fin.

Toujours selon l'invention, l'installation comprend, au niveau de l'unité de régulation, deux familles de jeux de doigts comprenant chacune deux jeux de doigts, et chaque jeu de doigts est installé sur une traverse, lesquelles traverses sont fixées à leurs extrémités sur des moyens d'entraînement en forme de chaînes sans fin qui sont tendues entre des roues dentées, lesquelles roues dentées sont montées sur deux arbres horizontaux espacés et disposés transversalement et chaque arbre comporte sa propre motorisation pour entraîner sa famille de jeux de doigts, lesquels organes moteurs, du type servomoteur, sont actionnés par l'intermédiaire d'un automate programmable avec un programme qui tient compte de la taille des produits et du mode de préparation des lots de produits pour réaliser, d'une part, un déphasage entre les deux familles de jeux de doigts afin de tenir compte de la dimension des produits ainsi que de la dimension des lots de produits et, d'autre part, pour réaliser le réglage de la vitesse d'avancement desdits jeux de doigts pour faire correspondre cette vitesse d'avancement aux vitesses qui sont requises pour chacun des modes de dégroupage de ces produits, soit le mode SFR, soit le mode SDR.

Selon une autre disposition de l'invention, chaque module de convoyage comporte un châssis longiligne constitué de parois latérales et de traverses, lequel châssis est muni, à chacune de ses extrémités, d'un socle qui est disposé entre lesdites parois latérales, chaque socle coopère avec un pion de centrage et de positionnement qui est installé sur un support disposé à l'extrémité correspondante de l'unité de régulation.

Selon l'invention, chacun des supports est guidé par l'une des glissières. Deux supports peuvent être prévus par module de convoyage. La glissière peut traverser un alésage du support.

Selon une autre particularité, la bande sans fin de chaque module de convoyage s'enroule sur un premier sabre du même module, chaque module ayant une extrémité, adjacente à l'entrée dudit convoyeur aval, qui comprend ledit premier sabre du même module et au niveau de laquelle la bande sans fin est enroulée à 180° (avec ainsi un contact sur la moitié de la surface cylindrique du premier sabre). Cette disposition améliore la compacité de l'installation, des supports des modules de convoyage et la glissière correspondante pouvant être situés à l'aplomb de cette extrémité d'enroulement (en dessous) sans ajouter un encombrement en longueur, et cela malgré la proximité entre les sabres appartenant respectivement aux modules de convoyage et au convoyeur aval.

L'invention concerne également le module de convoyage pour une installation de préparation de lots de produits telle que détaillée auparavant, lequel module comprend un châssis longiligne porteur d'une bande sans fin en forme de courroie crantée et d'une sole, ou tôle morte, disposée en amont de ladite courroie, laquelle courroie s'enroule, à l'extrémité qui est opposée à ladite sole, sur un sabre en forme de rouleau cranté de faible diamètre, de l'ordre de 10 à 15 mm.

Selon une autre disposition de l'invention, le module de convoyage comporte, du côté du sabre en forme de rouleau cranté, une poulie crantée d'entraînement de la courroie crantée, laquelle poulie crantée comporte un alésage central du type à facettes pour coopérer avec un arbre moteur de section appropriée et en particulier un arbre moteur extractible qui permet de démonter et de changer à volonté chaque module de convoyage selon les besoins, qu'il s'agisse de besoins de changement desdits modules pour utiliser des modules dont la largeur est adaptée à la dimension des produits ou tout simplement de besoins liés à l'entretien desdits modules.

### BREVE DESCRIPTION DES DESSINS

Pour pouvoir être exécutée, l'invention est exposée de façon suffisamment claire et complète dans la description suivante qui, en plus, est accompagnée de dessins dans lesquels :
- la figure 1 est une élévation schématique de l'installation pour un premier mode de dégroupage et de préparation des lots de produits, le mode "SFR" (Sélection par Flux Régulé) ;
- la figure 2 est une élévation schématique de l'unité de régulation des flux de produits, montrant les principaux éléments constitutifs de cette unité de régulation ;
- la figure 3 montre, d'une façon plus détaillée, la disposition de l'extrémité aval du module de convoyage par rapport à l'entrée du convoyeur aval et, en particulier, le sabre qui est disposé à l'entrée dudit convoyeur aval ;
- la figure 4 est une élévation schématique de l'installation pour un second mode de dégroupage et de préparation des lots de produits, le mode "SDR" (Sélection par Doigts Réglables) ;
- les figures 5 à 7 montrent, sous la forme de diagrammes, l'évolution de la position et des vitesses des différents jeux de doigts de l'unité de régulation ;
- la figure 8 est une vue partielle en perspective de l'unité de régulation montrant l'implantation d'une partie de ses principaux éléments ;
- la figure 9 est une vue en perspective de l'un des modules de convoyage selon l'invention, entrant dans la composition de l'unité de régulation ;
- la figure 10 est une vue en coupe du module de convoyage représenté figure 9, lequel module est complété avec des supports qui sont disposés à chacune de ses extrémités ; et
- la figure 11 est une vue en perspective, de façon détaillée, de l'un des supports d'un module de convoyage.

### DESCRIPTION DES MODES DE REALISATION PREFERES DE L'INVENTION

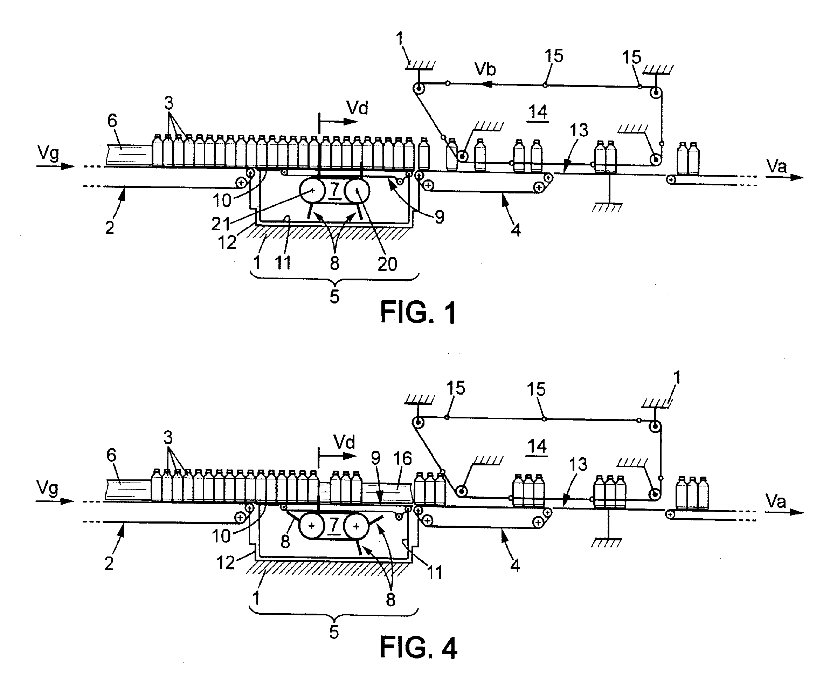

L'installation représentée figure 1 comprend un bâti 1 général sur lequel sont rassemblés :
- un convoyeur 2 amont, de gavage, à tapis sans fin, qui transporte, de façon continue et à une vitesse Vg un flux de produits 3 et en particulier des produits de section circulaire ou ovale, ou encore à facettes, comme, par exemple, des bouteilles, des flacons, ...etc. ;
- un système de convoyage en aval qui comprend, notamment, un convoyeur 4 aval de préparation, ou d'alimentation, à tapis sans fin, qui avance à une vitesse Va et qui déplace les lots de produits vers une machine de conditionnement, ou autre, non représentée, et,
- entre ledit convoyeur 2 amont et ledit convoyeur 4 aval, une unité 5 de régulation, laquelle unité de régulation contrôle la vitesse d'avancement du flux de produits 3.

Ces produits 3 arrivent sur plusieurs files au niveau du convoyeur 2 amont ; ils sont guidés par des parois 6 qui délimitent des couloirs, et ces produits traversent ensuite l'unité 5 de régulation, dans des couloirs également, et en particulier des couloirs qui sont aménagés pour apporter une très grande précision au guidage des produits, comme détaillés dans la demande PCT précitée.

Cette unité 5 de régulation se présente sous la forme d'un outillage interchangeable qui comprend des moyens pour contrôler et établir la vitesse de transit des produits 3 entre le convoyeur 2 amont et le convoyeur 4 aval, lesquels moyens sont constitués d'un système 7 de convoyage comportant des jeux de doigts 8 de régulation faisant office de butées et sont constitués de plusieurs modules 9 de convoyage qui s'étendent longitudinalement dans chaque couloir de l'unité 5 de régulation, entre la sole 10, ou tôle morte, qui est située à l'entrée de ladite unité 5 de régulation, et le convoyeur 4 aval.

Les jeux de doigts 8 de régulation seront détaillés plus loin ; ces doigts 8 barrent le passage des produits 3, faisant office de butées, et ils sont mobiles pour accompagner et référencer les produits 3 qui sont, d'une manière générale, pressés dans l'unité 5 de régulation par le convoyeur 2 amont. La vitesse Vg du convoyeur 2 amont de gavage est toujours supérieure à la vitesse Vd des doigts 8 de régulation.

L'ensemble des éléments constitutifs de l'unité 5 de régulation est rassemblé sur un châssis 11 et ce châssis 11 est intégré au bâti 1 général de l'installation, positionné dans un berceau 12 aménagé spécialement dans ledit bâti 1.

Toujours sur cette figure 1, on remarque un système global de convoyage aval qui comprend : - le convoyeur 4 aval, - la sole 13 qui le suit et, au-dessus, - un dispositif de convoyage du type orbital dénommé cycleur 14 qui comporte des barrettes 15, lesquelles barrettes 15 permettent le regroupement des rangs de produits 3 et la formation de lots, comme détaillé dans la demande PCT précitée.

L'installation représentée figure 1 correspond à un mode particulier de formation de lots, lequel mode est dénommé, comme précisé auparavant, sélection par flux régulé, ou SFR dans la suite du texte.

Dans ce mode SFR, le flux de produits 3 est régulé et contrôlé par les doigts 8 et par le module de convoyage qui avance à une vitesse Vc qui est du même ordre que la vitesse Vd des doigts, sensiblement inférieure. Ainsi, lorsque les produits atteignent l'extrémité de l'unité 5 de régulation, et en particulier l'extrémité du module 9 de convoyage, chaque rang est capté par le convoyeur 4 aval dont la vitesse Va est supérieure à la vitesse Vd des doigts 8 ainsi qu'à la vitesse Vc du module 9 de convoyage.

Les rangs de produits sont pris en charge par le cycleur 14 et en particulier par les barrettes 15. Les barrettes 15 avancent à une vitesse Vb qui est sensiblement supérieure à la vitesse Va du convoyeur aval de façon à regrouper, selon les nécessités, les rangs de produits 3 qui s'insèrent entre deux barrettes 15, au fur et à mesure de l'opération de dégroupage des rangs qui se présentent en sortie de l'unité 5 de régulation.

Ce mode SFR, représenté figure 1, correspond au mode de préparation de lots qui est décrit dans la demande PCT précitée.

Cependant, comme détaillé ci-après, le module 9 de convoyage installé au niveau de l'unité 5 de régulation présente des caractéristiques nouvelles qui permettent de réaliser sur cette même installation, un autre mode de préparation de lots de produits 3, lequel mode, dénommé sélection par doigts réglables, ou SDR, permet de préparer des lots de produits 3 dont la longueur peut être plus importante et surtout de préparer des lots de produits 3 qui sont, par exemple, moins rigides que ceux qui sont préparés par le mode SFR détaillé auparavant.

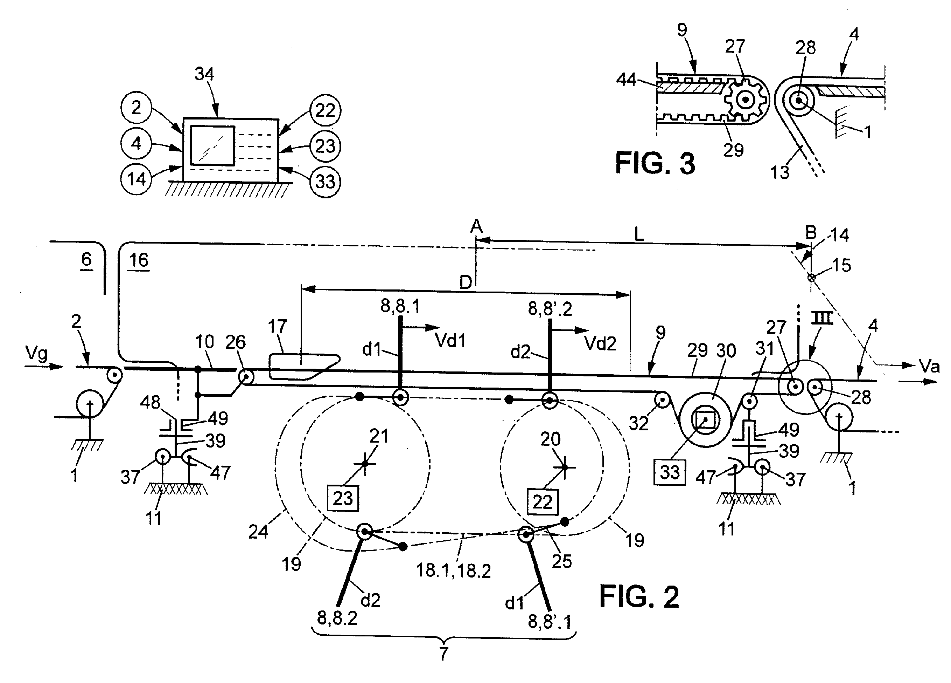

La figure 2 représente, d'une façon plus détaillée, les éléments de l'unité de régulation qui sont mis en oeuvre pour offrir à l'installation générale de préparation de lots cette possibilité de préparer des lots en fonction des produits 3 et en fonction de la dimension et des formes de lots à préparer, laquelle préparation s'effectue en choisissant, selon le cas, soit le mode SFR, illustré figure 1, soit le mode SDR, illustré figure 4.

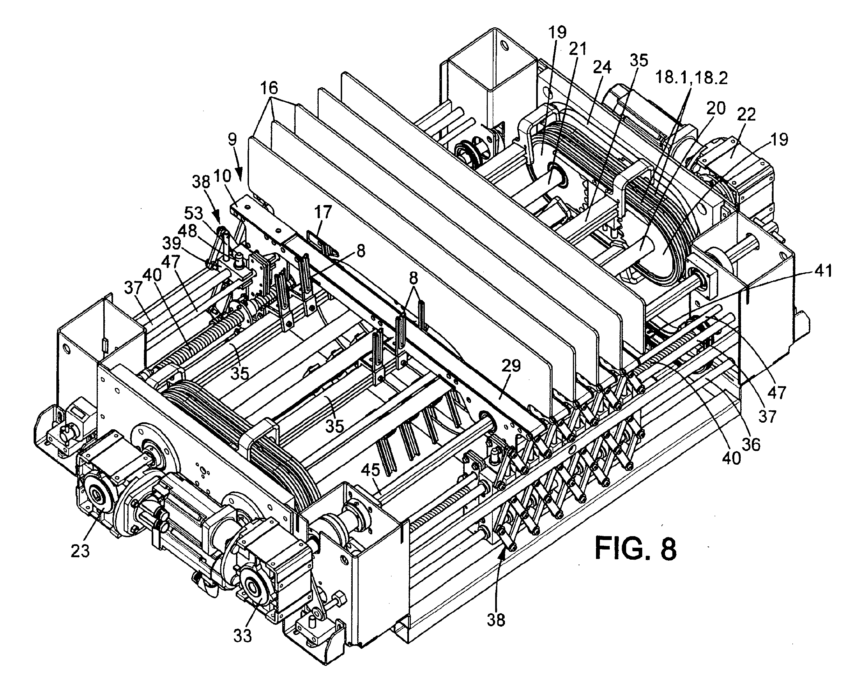

On retrouve, sur cette figure 2, le convoyeur 2 amont et le convoyeur 4 aval avec, entre les deux, les éléments de l'unité 5 de régulation et, en particulier, le module 9 de convoyage et la sole 10 qui fait la jonction entre ledit convoyeur 2 amont et l'entrée dudit module 9 de convoyage. Des parois 16 délimitent les couloirs de l'unité 5 de régulation ; ces parois 16 sont situées dans le prolongement des parois 6 qui délimitent les couloirs du convoyeur 2 amont. Ces parois 16 peuvent comporter, comme représentée sur les figures 2 et 8, une fenêtre 17 qui se situe à l'entrée du module 9 de convoyage. Cette fenêtre permet de surveiller la zone où les doigts 8 se mettent en place entre deux produits 3 consécutifs.

Sous le module 9 de convoyage, on trouve le système 7 de convoyage comportant les jeux de doigts 8. Ce système de convoyage, comme décrit dans la demande PCT précitée, comporte deux familles de jeux de doigts 8 et dans chaque famille on trouve un couple de jeux de doigts 8 qui sont repérés 8.1, 8'.1 pour la famille d1 et un couple de jeux de doigts 8 qui sont repérés 8.2 et 8'.2 pour la famille d2. Tous ces jeux de doigts 8 sont disposés transversalement et les familles d1 et d2 sont imbriquées, c'est-à-dire que chaque jeu de doigts d'une famille est disposé entre les jeux de l'autre famille.

Le couple de jeux de doigts 8.1, 8'.1 est entraîné par un système de chaînes sans fin 18 et, plus particulièrement, un système de chaînes repéré 18.1 sur la figure 8 ; ces chaînes 18.1 sont disposées latéralement dans l'unité 5 de régulation, tendues entre des roues dentées 19 qui sont montées sur deux arbres 20 et 21 parallèles entre eux, lesquels arbres 20 et 21 s'étendent transversalement dans l'unité 5 de régulation, sous les modules 9 de convoyage. L'entraînement des chaînes 18.1 et du couple de jeux de doigts 8.1 et 8'.1 s'effectue au moyen d'un servomoteur 22 qui coopère, par exemple, avec les roues 19 dentées par l'intermédiaire de l'arbre 20.

De la même façon, le couple de jeux de doigts 8.2, 8'.2, est associé à des chaînes 18.2 tendues entre d'autres roues dentées 19 et l'entraînement s'effectue au moyen d'un servomoteur 23 par l'intermédiaire de l'arbre 21. Le mouvement d'avance des jeux de doigts 8 et leur vitesse Vd1 et Vd2 découlent des mouvements de leurs chaînes 18.1 et 18.2 respectives d'entraînement.

L'orientation de ces doigts 8 découle de leur guidage au moyen d'une came 24 dont le profil est représenté en traits mixtes fins sur la figure 2. Un galet suiveur, porté par un bras 25, suit le profil de la came 24 pour donner une orientation verticale aux jeux de doigts 8 lors de leur introduction entre les produits 3, à l'entrée du module 9 de convoyage et lors de leur retrait, lequel retrait, dans le mode SFR, se fait dans une position verticale alors que dans le mode SDR, le retrait se décompose en un mouvement d'avance rapide pour libérer le front du lot de produits et, ensuite, en un mouvement vertical pour libérer le passage dudit lot de produits dont le dégroupage s'effectue grâce à la vitesse du module 9 de convoyage.

Tous ces éléments se retrouvent, comme indiqué auparavant, sur la figure 8 qui sera détaillée plus loin.

Le module 9 de convoyage comprend une bande sans fin qui s'étend entre un rouleau 26 disposé en amont et un rouleau de très faible diamètre, généralement appelé sabre, disposé à la partie aval. Ce sabre 27 fait front avec le sabre 28 du convoyeur aval 4, comme représenté de façon plus détaillée figure 3.

La bande sans fin du module 9 de convoyage se présente, figure 3, sous la forme d'une courroie 29 crantée. Cette courroie 29 est entraînée, au niveau de son brin inférieur, par une poulie 30 qui est disposée à la partie aval dudit module 9, entre deux rouleaux 31 et 32 qui assurent l'enroulement de ladite courroie 29 sur une portion qui correspond environ à la demi-circonférence de ladite poulie 30.

Cette poulie 30 est située du côté du sabre 27 et elle est entraînée par un servomoteur 33.

Les différents servomoteurs, c'est-à-dire les servomoteurs 22 et 23 pour l'entraînement des jeux de doigts 8 et le servomoteur 33 pour l'entraînement du module 9 de convoyage, sont contrôlés et commandés au moyen d'un automate 34 programmable de façon à régler leur vitesse en fonction des besoins. De même, l'automate 34 commande notamment les vitesses du convoyeur 4 et du cycleur 14 qui font partie du système de convoyage situé en aval de l'unité 5 de régulation, et ceci en fonction de la vitesse du convoyeur 2 situé en amont.

On remarque également, sur cette figure 2, que le module 9 de convoyage est simplement posé sur le châssis 11 de l'unité 5 de régulation. Ce module de convoyage 9 et ses moyens de liaison avec le châssis 11 seront détaillés plus loin en liaison avec les figures 8 à 11.

La figure 3 montre, d'une façon plus détaillée, l'extrémité aval du module 9 de convoyage et l'extrémité amont du convoyeur 4 aval. La courroie 29 crantée est entraînée par la poulie 30 qui est crantée elle aussi. Cette courroie 29 crantée s'enroule, à l'extrémité aval du module 9, sur le sabre 27 qui se présente sous la forme d'un rouleau cranté de très faible diamètre ; le diamètre de ce rouleau 27 est compris entre 10 et 15 mm, par exemple. Avec la courroie 29, le rayon global à l'extrémité du module 9 de convoyage, est de 7 mm, par exemple.

De la même façon, l'extrémité amont du convoyeur 4 aval comporte un sabre 28 en forme de rouleau dont le diamètre est, lui aussi, de l'ordre de 10 à 15 mm et sur lequel s'enroule le tapis dudit convoyeur 4. Le rayon mesuré à l'entrée de ce convoyeur 4 est lui aussi, de préférence, de l'ordre de 7 mm.

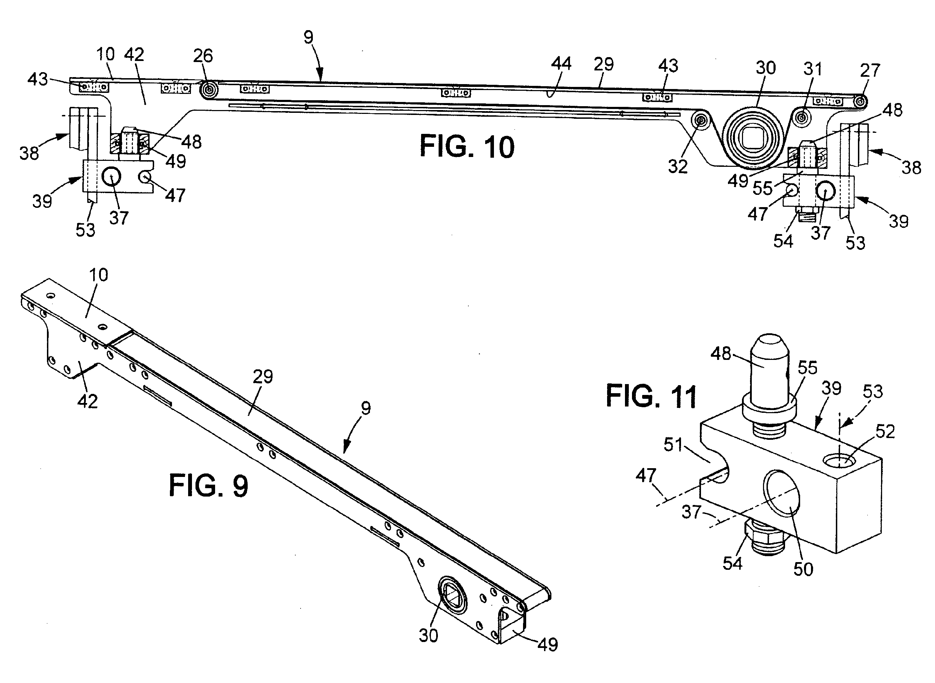

Cet aménagement des extrémités du module 9 et du convoyeur 4 aval au moyen de sabres de très faible diamètre permet de limiter le déséquilibrage des produits 3 au niveau de cette rupture de continuité de la surface de guidage ; ce genre de rupture de continuité est généralement, comme c'est le cas en amont du module 9, résolue par l'implantation d'une sole. Comme cela est bien visible sur les figures 2 et 3 (voir également figures 9-10), à l'extrémité voisine du convoyeur 4 aval, la courroie 29 du module 9 est enroulée avec un retour à 180°.

Les particularités du mode SDR imposent des vitesses différentes de celles du mode SFR pour les différents systèmes de convoyage. Ainsi, la vitesse Vc de la courroie 29 crantée du module 9 est égale à la vitesse Va du convoyeur 4 aval.

En effet, comme représentée figure 4, la séparation des produits 3 pour former un lot, s'effectue au niveau de l'unité 5 de régulation. La vitesse de la courroie 29 crantée est en effet supérieure à la vitesse Vd des doigts 8 de sorte que la séparation des produits s'effectue dans l'unité 5 de régulation et non plus à son extrémité aval comme c'est le cas pour le mode SFR tel que représenté figure 1.

Les lots de produits préparés selon le mode SDR sont repris par le convoyeur 4 aval et peuvent également être pris en charge par le cycleur 14 et en particulier par ses barrettes 15 pour effectuer un compactage longitudinal et, selon le cas, un compactage transversal au moyen de guides, non représentés, positionnés entre le convoyeur 4 et le brin inférieur du cycleur 14 du système de convoyage aval, ou au-dessus du niveau desdites barrettes 15.

Pour le mode SDR, les lots sont préparés au moyen des différents jeux de doigts 8. En effet, l'intervalle entre deux jeux de doigts 8, 8.1 et 8.2, par exemple, comme représenté figure 4, correspond au nombre de rangs de produits 3 qui constituent le lot. Cet intervalle peut s'étendre de 75 à 300 mm par exemple.

Le lot délimité est pris en charge à la volée entre les jeux de doigts 8 consécutifs ; lorsqu'un jeu de doigts 8 est en position active pour retenir le flux de produits amont, le jeu de doigts aval peut s'éclipser, libérant le lot de produits, lequel lot, du fait de la différence des vitesses entre la vitesse Vc de la courroie 29 crantée et Vd, s'éloigne rapidement du front de produits 3 qui est retenu par le jeu de doigts 8 actifs, réalisant ainsi la séparation des lots, lesquels lots sont repris ensuite par le convoyeur 4 aval et, éventuellement, par le cycleur 14.

Les servomoteurs 22 et 23 ont donc plusieurs fonctions. Tout d'abord ces servomoteurs 22 et 23 sont utilisés pour établir, initialement, une distance Dd entre deux jeux de doigts, et ceci aussi bien pour le mode SFR que pour le mode SDR et ils permettent également, lorsque l'un des jeux dont les doigts sont actifs et avancent à une vitesse nominale prévue, d'accélérer le mouvement des jeux de doigts inactifs afin de repositionner le premier jeu pour prendre le relais desdits doigts actifs, en insérant lesdits doigts précédemment inactifs dans le flux de produits 3, à la position prévue à cet effet, qu'il s'agisse d'une position de contrôle du flux comme dans le mode SFR ou une position particulière qui correspond à la longueur du lot, comme dans le mode SDR.

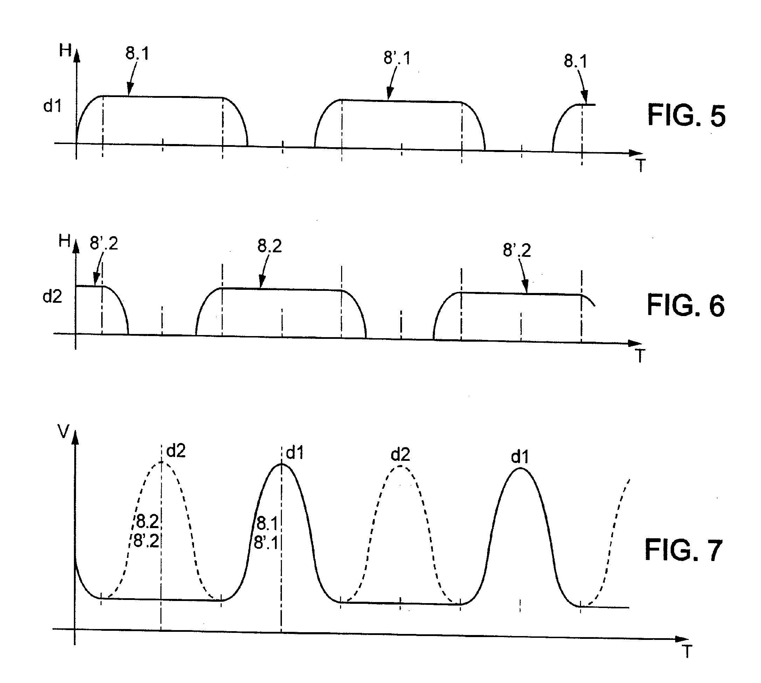

Les figures 5 et 6 montrent, sous forme de diagrammes, les positions actives des jeux de doigts 8 avec en ordonnée la position de l'extrémité supérieure de chaque doigt par rapport à la courroie 29 crantée du module 9 de convoyage et, en abscisse, le temps.

Ainsi, figure 5, pour la famille d1 qui comporte les jeux de doigts 8.1 et 8'.1, on remarque tout d'abord la mise en position active du jeu de doigts 8.1 qui correspond à une période de temps donnée et, entre la position active du doigt 8.1 et la position active des doigts 8'.1, on remarque un intervalle d'inactivité qui est comblé par l'un des jeux de doigts de la seconde famille d2 et en particulier le jeu de doigts 8.2.

Ainsi, le flux de produits 3, est constamment retenu et contrôlé par l'un des jeux de doigts 8 de chaque famille d1 et d2. L'écart entre deux jeux de doigts 8 consécutif peut varier, par exemple, de 75 à 300 mm, comme indiqué précédemment.

La figure 7 montre, toujours sous la forme d'un diagramme, l'évolution de la vitesse des jeux de doigts 8 de chaque famille, en rapport avec leurs positions telles que représentées figures 5 et 6. Les jeux de doigts 8.1 et 8'.1 de la famille d1 sont représentés en trait fort alors que les jeux de doigts 8.2 et 8'.2 de la famille d2 sont représentés en pointillés. Ainsi, lorsque le jeu de doigts 8.1 est en position active, sa vitesse est stable et uniforme ainsi que celle du jeu 8'.1 qui fait partie de la même famille. Dès que le jeu de doigts 8.2 arrive en position active, pour prendre le relais du jeu de doigts 8.1, le jeu de doigts 8.1 s'escamote avec une accélération très forte et une vitesse importante pour se recaler et, en particulier, caler le jeu de doigts 8'.1 en position active avant l'escamotage du jeu de doigts 8.2.

Les diagrammes figures 5 et 7 correspondent principalement à un fonctionnement de l'unité 5 de régulation selon le mode SDR. Dans le cas du mode SFR, l'écart entre les deux familles de jeux de doigts peut être plus régulier ; il est toutefois pratiquement ajusté à chaque nouvelle introduction pour coordonner le jeu de doigts avec les espaces entre deux produits 3 consécutifs.

Dans le cas du mode SDR, pour obtenir un dégroupage rapide des lots, il faut escamoter très rapidement les doigts amont, dès que les doigts aval suivants sont en position active, capables de contrôler l'avancement du flux de produits qui va permettre la formation du lot suivant.

La longueur L de la portion du module 9 de convoyage où la courroie 29 crantée emporte le lot de produits à une vitesse supérieure à la vitesse d'avancement du front de produits retenus par le jeu de doigts 8 actifs, est de l'ordre de une à une fois et demie la distance D parcourue par un jeu de doigts 8 lorsque ces derniers sont en saillie dans les couloirs de circulation des produits, comme représentée figure 2. Cette longueur L correspond en fait à la distance entre le point A où, dans le mode SDR, le jeu de doigts 8 libère le lot de produits, et le point B qui correspond à l'emplacement où les lots de produits sont pris en charge par la barrette 15 qui arrive à proximité de l'extrémité aval du module 9 de convoyage.

La figure 8 schématise une unité 5 de régulation selon l'invention. Cette unité comprend un châssis 11 sur lequel sont installés les servomoteurs 22 et 23 qui servent, respectivement, à l'entraînement des familles de jeux de doigts 8. Une première famille d1 de jeux de doigts 8 est installée sur des traverses 35 qui sont portées et entraînées par les chaînes sans fin 18 disposées latéralement, lesquelles chaînes sans fin sont tendues entre les roues dentées 19; chaque chaîne 18 est associée à une famille d1 ou d2 de jeux de doigts 8 et chaque chaîne 18 est entraînée par son propre servomoteur 22 ou 23, de façon autonome au moyen de l'automate 34.

Les doigts 8 enserrent chaque module 9 de convoyage et en particulier la bande sans fin constituée de la courroie 29 crantée et ces doigts 8, en forme de diapasons ; ils enfourchent les parois 16 qui délimitent les différents couloirs dans lesquels circulent les flux de produits 3.

Les parois 16 sont guidées sur des glissières 36 et 37 disposées transversalement et elles sont manipulées au moyen d'un système 38 du type pantographe pour permettre un réglage approprié de leur largeur en fonction des dimensions des produits 3 à mettre en lots. Dans leur mouvement, les parois 16 déplacent automatiquement les doigts 8, lesquels doigts 8 sont montés coulissants sur les traverses 35.

Les modules 9 de convoyage sont installés sur des supports 39 qui sont directement liés au système 38 de pantographe de façon à assurer un centrage automatique desdits modules 9 dans chaque couloir entre les parois 16, lors d'un réglage de la largeur de chacun des couloirs.

L'écartement des parois 16 est réalisé au moyen d'un système vis-écrou ; une vis 40 est disposée de chaque côté de l'unité 5 de convoyage, à son entrée côté amont et à sa sortie côté aval et les deux vis 40 ont un mouvement coordonné au moyen d'une transmission 41 par chaîne.

Les modules 9 de convoyage sont représentés de façon plus détaillée figures 9 et 10. Chaque module 9 comprend un châssis longiligne qui est constitué de deux plaques 42 latérales, lesquelles plaques sont découpées en forme de pont pour épouser le circuit des traverses 35 qui portent les jeux de doigts 8. Ces deux plaques 42 sont fixées au moyen d'entretoises 43 qui portent, à la partie amont, la sole et, sur le reste de la longueur du module, une plaque 44 qui sert de surface de guidage pour le brin supérieur de la courroie 29 crantée.

La longueur du brin supérieur de la courroie 29 crantée, est de l'ordre de 2 à 3 fois la distance parcourue par un jeu de doigts 8 pendant la phase où lesdits doigts 8 sont en saillie dans les couloirs de guidage des produits à dégrouper.

L'extrémité aval du module 9 de convoyage comporte le sabre 27 en forme de rouleau cranté dont l'axe est porté par les plaques 42 de même que les rouleaux 31 et 32 qui servent de guide d'enroulement de la courroie 25 crantée. L'un des rouleaux, le rouleau 32, par exemple, peut servir de rouleau de tension pour la courroie 29 crantée.

La poulie 30 d'entraînement de la courroie 29 est également portée et guidée entre les plaques 42. Cette poulie 30 comporte un moyeu aménagé pour coopérer avec un arbre de section carrée par exemple, lequel arbre 45, entraîné par le servomoteur 33, est aménagé pour s'enfiler dans le moyeu des différentes poulies 30 de chaque module 9 de convoyage, lesquelles poulies 30 sont alignées sur toute la largeur de l'unité 5 de convoyage. Cet arbre 45 est extractible afin de permettre une libération aisée de l'ensemble des modules 9 de convoyage.

En effet, comme signalé déjà en liaison avec la figure 2, les modules 9 de convoyage se présentent sous la forme d'outillage ; ils sont adaptés, notamment, à la dimension des produits 3 à véhiculer. Ces modules 9 sont démontables facilement ; ils sont simplement posés à chacune de leurs extrémités sur le support 39 qui est lié au système 38 de pantographe pour être déplacé en même temps que les parois 16 lors d'un réglage de la largeur des couloirs.

Chaque support 39 est guidé sur la glissière 37 supérieure qui sert de guide aux parois 16 et sur une glissière 47 qui lui est propre et qui sert à le maintenir en position appropriée. Le support 39 comporte un pion 48 vertical à sa partie supérieure qui coopère avec un socle 49 disposé à la partie inférieure et à chaque extrémité des modules 9 de convoyage. Ce socle 49, serré entre les plaques 42, comporte un alésage cylindrique, ou oblong, pour accueillir le pion 48 du support 39 correspondant.

Comme représenté figure 11, le support 39 se présente sous la forme d'un bloc qui comporte plusieurs aménagements : - un alésage 50 pour le passage de la glissière 37, - une rainure 51 pour le passage de la glissière 47 et - un alésage 52 pour le passage d'une glissière 53, visible figure 10, notamment, qui est menée par le système 38 du type pantographe.

Le pion 48 comporte, de préférence, une partie inférieure filetée, comme représentée figure 11, qui coopère avec un taraudage réalisé dans le support 39. Un contre-écrou 54 permet de verrouiller la position du pion 48 et, en particulier, de son épaulement 55 qui sert d'appui et de référence pour le socle 49 du module 9 de convoyage. Ce pion 48 avec épaulement 55 est de préférence utilisé du côté aval de l'unité 5 de régulation, pour ajuster avec le maximum de précision la position de l'extrémité aval du module 9 de convoyage par rapport à l'entrée du convoyeur 4 aval ; il s'agit de mettre les sabres 27 de chaque module 9 en concordance avec le sabre 28 du convoyeur 4 aval, afin de ne pas déséquilibrer les produits lors de leur passage de l'un à l'autre.

## Revendications

1. Installation pour la préparation de lots de produits, bouteilles ou autres, laquelle installation comprend :
- un convoyeur (2) amont qui amène des files de produits (3) et un système de convoyage situé en aval comprenant un convoyeur (4) aval de préparation qui est surmonté d'un cycleur (14) à barrettes (15) ;
- une unité (5) de régulation du flux de produits (3), interposée entre ledit convoyeur (2) amont et ledit convoyeur (4) aval, laquelle unité de régulation comporte des couloirs pour chaque file de produits (3), chaque couloir étant délimité par des parois (16) qui sont guidées sur des glissières (36, 37) disposées transversalement, et, dans chaque couloir, un module (9) de convoyage du type à bande sans fin et des jeux de doigts (8) de régulation mobiles pour contrôler la vitesse d'avancement desdits produits (3), lesquels jeux de doigts (8) sont répartis en deux familles imbriquées et commandées séparément par des organes moteurs appropriés pour permettre un réglage de l'écartement desdits jeux de doigts (8) consécutifs et pour référencer lesdits produits, un support (39) qui peut être guidé transversalement étant associé à chacun des modules (9) de convoyage,
**caractérisée en ce que** la bande sans fin de chaque module (9) de convoyage s'étend jusqu'à l'entrée dudit convoyeur (4) aval, **en ce que** des moyens de commande sont prévus pour régler séparément la vitesse de chacune des deux familles de jeux de doigts (8) de régulation et pour régler, notamment, la vitesse dudit convoyeur (4) aval, de façon à réaliser deux modes de dégroupage desdits produits, et **en ce que** chacun des supports (39) est guidé par l'une des glissières (36, 37).

2. Installation selon la revendication 1, dans laquelle chaque module (9) de convoyage comprend un premier sabre (27), la bande sans fin de chaque module (9) de convoyage s'enroulant sur le premier sabre (27) du même module (9) et le tapis du convoyeur (4) aval s'enroulant sur un deuxième sabre (28), de façon à limiter les risques de déstabilisation et de déséquilibrage des produits (3) lorsqu'ils passent de ladite bande audit tapis.

3. Installation selon la revendication 2, dans laquelle la bande sans fin de chaque module (9) de convoyage se présente sous la forme d'une courroie (29) crantée, laquelle courroie (29) crantée est entraînée par une poulie (30) crantée également afin de garantir la vitesse Vc de progression des produits (3) lorsque, dans l'un des modes de dégroupage, ils sont libérés par le jeu de doigts (8) correspondant, dans la partie aval des couloirs de l'unité (5) de régulation.

4. Installation selon la revendication 3, dans laquelle ledit premier sabre (27), situé à l'extrémité aval du module (9) de convoyage, est constitué d'un rouleau cranté de faible diamètre, ledit diamètre étant de l'ordre de 10 à 15 mm, offrant un rayon hors tout, avec la courroie (29), qui est de l'ordre de 7 mm.

5. Installation pour la préparation de lots de produits selon l'une quelconque des revendications précédentes, comportant, au niveau de chaque module (9) de convoyage, une bande sans fin animée au moyen d'un servomoteur (33) susceptible d'établir plusieurs vitesses d'avancement selon le mode de dégroupage prévu, et en particulier :
- dans un mode de dégroupage dénommé SFR, une vitesse Vc égale à la vitesse du jeu de doigts (8) de régulation qui actif, est en position de retenue des produits, et inférieure à la vitesse Va du convoyeur (4) aval, ledit convoyeur (4) aval effectuant la séparation des rangs de produits et un cycleur (14) à barrettes (15) effectuant le regroupement éventuel desdits rangs pour former ledit lot de produits,
- ou, dans l'autre mode de dégroupage, dénommé SDR, une vitesse Vc supérieure à la vitesse Vd des jeux de doigts (8) de régulation, et sensiblement égale à la vitesse Va dudit convoyeur (4) aval, pour faire effectuer la séparation des lots qui sont délimités par la bande sans fin dudit module (9) de convoyage, directement dans les couloirs de l'unité (5) de régulation.

6. Installation selon l'une quelconque des revendications précédentes, dans laquelle chaque module (9) de convoyage comporte, en amont de sa bande sans fin, un plan fixe, ou sole (10), pour réaliser la jonction entre l'extrémité aval du convoyeur (2) amont et ladite bande sans fin.

7. Installation selon l'une quelconque des revendications précédentes, comprenant, au niveau de l'unité (5) de régulation, deux familles (d1, d2) de jeux de doigts (8) comprenant chacune deux jeux de doigts (8), et chaque jeu de doigts (8) est installé sur une traverse (35), lesquelles traverses (35) sont fixées à leurs extrémités sur des moyens d'entraînement en forme de chaînes (18) sans fin qui sont tendues entre des roues (19) dentées, lesquelles roues (19) dentées sont montées sur deux arbres (20, 21) horizontaux espacés et disposés transversalement et chaque arbre comporte sa propre motorisation pour entraîner sa famille de jeux de doigts (8), lesquels organes moteurs, du type servomoteur (22, 23), sont actionnés par l'intermédiaire d'un automate (34) programmable avec un programme qui tient compte de la taille des produits et du mode de préparation des lots de produits pour réaliser, d'une part, un déphasage entre les deux familles de jeux de doigts (8) afin de tenir compte de la dimension des produits ainsi que de la dimension des lots de produits et, d'autre part, pour réaliser le réglage de la vitesse d'avancement desdits jeux de doigts (8) pour faire correspondre cette vitesse d'avancement aux vitesses qui sont requises pour chacun des modes de dégroupage de ces produits, soit le mode SFR, soit le mode SDR.

8. Installation selon l'une quelconque des revendications précédentes, dans laquelle chaque module (9) de convoyage comporte un châssis longiligne constitué de parois (42) latérales et de traverses (43), lequel châssis est muni, à chacune de ses extrémités, d'un socle (48) qui est disposé entre lesdites parois (42) latérales, chaque socle (48) coopère avec un pion (49) de centrage et de positionnement qui est installé sur un support (39) disposé à l'extrémité correspondante de l'unité (5) de régulation.

9. Installation selon la revendication 1, dans laquelle ladite glissière (37) traverse un alésage (50) du support (39).

10. Installation selon l'une quelconque des revendications précédentes, dans laquelle la bande sans fin de chaque module (9) de convoyage s'enroule sur un premier sabre (27) du même module (9), chaque module (9) ayant une extrémité, adjacente à l'entrée dudit convoyeur (4) aval, qui comprend ledit premier sabre du même module et au niveau de laquelle la bande sans fin est enroulée à 180°.

11. Module de convoyage pour une installation de préparation de lots de produits selon l'une quelconque des revendications 1 à 10, comprenant un châssis longiligne porteur d'une bande sans fin en forme de courroie (29) crantée et d'une sole (10), laquelle courroie (29) s'enroule, à l'extrémité qui est opposée à ladite sole (10), sur un sabre (27) en forme de rouleau cranté de faible diamètre, de l'ordre de 10 à 15 mm.

12. Module de convoyage selon la revendication 11, comportant, du côté du sabre (27) en forme de rouleau cranté, une poulie (30) crantée d'entraînement de la courroie (29) crantée ; laquelle poulie (30) comporte un alésage central du type à facettes pour coopérer avec un arbre (45) moteur de section appropriée et en particulier un arbre (45) moteur extractible qui permet de démonter et de changer à volonté chaque module (9) de convoyage selon les besoins.

## Patentansprüche

1. Anlage zur Herstellung von Produktchargen, Flaschen oder Ähnlichem, die Anlage umfassend:
- einen stromaufwärtigen Förderer (2), der Produktreihen (3) befördert, und ein stromabwärts gelegenes Fördersystem, das einen stromabwärtigen Herstellungsförderer (4) umfasst, der über dem ein Cycler (14) mit Stegen (15) angeordnet ist,
- eine zwischen dem stromaufwärtigen Förderer (2) und dem stromabwärtigen Förderer (4) angeordnete Einheit (5) zur Regelung des Produktflusses (3), wobei die Regelungseinheit Bahnen für jede Produktreihe (3) umfasst, wobei jede Bahn durch Wände (16) begrenzt ist, die auf quer angeordneten Gleitschienen (36, 37) geführt werden, und in jeder Bahn ein Fördermodul (9) vom Typ mit Endlosband und bewegliche Regelungsfingersätze (8) zur Steuerung der Vorschubgeschwindigkeit der Produkte (3) umfasst, wobei die Fingersätze (3) in zwei Familien unterteilt sind, die ineinander greifen und separat durch Antriebsorgane gesteuert werden, die geeignet sind, um eine Einstellung des Abstands der aufeinander folgenden Fingersätze (8) zu ermöglichen und die Produkte zu referenzieren, wobei ein Träger (39), der quer geführt werden kann, mit jedem der Fördermodule (9) verbunden ist,
**dadurch gekennzeichnet, dass** sich das Endlosband jedes Fördermoduls (9) bis zum Eingang des stromabwärtigen Förderers (4) erstreckt, dadurch, dass die Steuerungsmittel vorgesehen sind, um die Geschwindigkeit jeder der beiden Familien von Regelungsfingersätzen (8) separat zu regeln und um insbesondere die Geschwindigkeit des stromabwärtigen Förderers (4) zu regeln, so dass zwei Aufteilungsmodi der Produkte realisiert werden, und dadurch, dass jeder Träger (39) von einer der Gleitschiene (36, 37) geführt wird.

2. Anlage nach Anspruch 1, wobei jedes Fördermodul (9) einen ersten Säbel (27) umfasst, wobei sich das Endlosband jedes Fördermoduls (9) um den ersten Säbel (27) desselben Moduls (9) wickelt und das Förderband des stromabwärtigen Förderers (4) sich um einen zweiten Säbel (28) wickelt, so dass die Risiken der Destabilisierung und ungleichmäßigen Gewichtsverteilung der Produkte (3) begrenzt werden, wenn sie vom Endlosband zum Förderband wechseln.

3. Anlage nach Anspruch 2, wobei das Endlosband jedes Fördermoduls (9) die Form eines Zahnriemens (29) aufweist, wobei der Zahnriemen (29) durch eine ebenfalls gezahnte Riemenscheibe (30) angetrieben wird, um die Fortbewegungsgeschwindigkeit Vc der Produkte (3) zu garantieren, wenn sie in einem der Aufteilungsmodi von dem entsprechenden Fingersatz (8) in dem stromabwärtigen Teil der Bahnen der Regelungseinheit (5) freigegeben werden.

4. Anlage nach Anspruch 3, wobei der erste, sich am stromabwärtigen Ende des Fördermoduls (9) befindende Säbel (27) aus einer Zahnrolle mit geringem Durchmesser besteht, wobei der Durchmesser in der Größenordnung von 10 bis 15 mm liegt und mit dem Riemen (29) einen Gesamtradius ergibt, der in der Größenordnung von 7 mm liegt.

5. Anlage zur Herstellung von Produktchargen nach einem der vorhergehenden Ansprüche, die auf Höhe jedes Fördermoduls (9) ein Endlosband umfasst, das mittels eines Servomotors (33) bewegt wird, der geeignet ist, mehrere Vorschubgeschwindigkeiten nach dem vorgesehenen Aufteilungsmodus und insbesondere:
- in einem SFR genannten Aufteilungsmodus eine Geschwindigkeit Vc zu erzeugen, die gleich der Geschwindigkeit des Regelungsfingersatzes (8) ist, der sich aktiv in der Halteposition der Produkte befindet, und geringer als die Geschwindigkeit Va des stromabwärtigen Förderers (4) ist, wobei der stromabwärtige Förderer (4) die Trennung der Produktreihen vornimmt und ein Cycler (14) mit Stegen (15) die eventuelle Umgruppierung der Reihen vornimmt, um die Produktcharge zu bilden,
- oder in dem anderen, SDR genannten Aufteilungsmodus eine Geschwindigkeit Vc zu erzeugen, die höher als die Geschwindigkeit Vd des Regelungsfingersatzes (8) und im Wesentlichen gleich der Geschwindigkeit Va des stromabwärtigen Förderers (4) ist, um die Trennung der Chargen, die durch das Endlosband des Fördermoduls (9) begrenzt sind, direkt in den Bahnen der Regelungseinheit (5) vornehmen zu lassen.

6. Anlage nach einem der vorhergehenden Ansprüche, wobei jedes Fördermodul (9) stromaufwärts von seinem Endlosband eine feste Ebene oder Sohle (10) umfasst, um die Verbindung zwischen dem stromabwärtigen Ende des stromaufwärtigen Förderers (2) und dem Endlosband herzustellen.

7. Anlage nach einem der vorhergehenden Ansprüche, umfassend auf Höhe der Regelungseinheit (5) zwei Familien (d1, d2) von Fingersätzen (8), die jeweils zwei Fingersätze (8) umfassen, wobei jeder Fingersatz (8) auf einem Querbalken (35) installiert ist und die Querbalken (35) an ihren Enden auf Antriebsmitteln in Form von Endlosketten (18) befestigt sind, die zwischen den Zahnrädern (19) gespannt sind, wobei die Zahnräder (19) auf zwei beabstandeten und quer angeordneten horizontalen Wellen (20, 21) montiert sind und jede Welle ihre eigene Motorisierung umfasst, um ihre Familie von Fingersätzen (8) anzutreiben, wobei die Antriebsorgane vom Typ Servomotor (22, 23) über einen programmierbaren Automaten (34) mit einem Programm betätigt werden, das die Größe der Produkte und den Herstellungsmodus der Produktchargen berücksichtigt, um einerseits eine Phasenverschiebung zwischen den beiden Familien von Fingersätzen (8) zu erzeugen, um die Abmessung der Produkte sowie die Abmessung der Produktchargen zu berücksichtigen, und um andererseits die Regelung der Vorschubgeschwindigkeit der Fingersätze (8) vorzunehmen, damit diese Vorschubgeschwindigkeit den Geschwindigkeiten entspricht, die für die jeweiligen Aufteilungsmodi dieser Produkte, entweder den SFR-Modus oder den SDR-Modus, erforderlich sind.

8. Anlage nach einem der vorhergehenden Ansprüche, wobei jedes Fördermodul (9) einen langgestreckten Rahmen umfasst, der aus Seitenwänden (42) und Querbalken (43) besteht, wobei der Rahmen an jedem seiner Enden mit einem Sockel (48) ausgestattet ist, der zwischen den Seitenwänden (42) angeordnet ist, jeder Sockel (48) mit einem Zentrier- und Positionierzapfen (49) kooperiert, der auf einem an dem entsprechenden Ende der Regelungseinheit (5) angeordneten Träger (39) installiert ist.

9. Anlage nach Anspruch 1, wobei die Gleitschiene (37) eine Bohrung (50) des Trägers (39) überquert.

10. Anlage nach einem der vorhergehenden Ansprüche, wobei sich das Endlosband jedes Fördermoduls (9) um einen ersten Säbel (27) desselben Moduls (9) wickelt, wobei jedes Modul (9) ein zum Eingang des stromabwärtigen Förderers (4) benachbartes Ende aufweist, das den ersten Säbel desselben Moduls umfasst und auf dessen Höhe das Endlosband um 180° aufgewickelt ist.

11. Fördermodul für eine Anlage zur Herstellung von Produktchargen nach einem der Ansprüche 1 bis 10, umfassend einen langgestreckten Rahmen, der ein Endlosband in Form eines Zahnriemens (29) und eine Sohle (10) trägt, wobei sich der Riemen (29) an dem der Sohle (10) gegenüberliegenden Ende um einen Säbel (27) in Form einer Zahnrolle mit geringem Durchmesser in der Größenordnung von 10 bis 15 mm wickelt.

12. Fördermodul nach Anspruch 11, umfassend auf der Seite des Säbels (27) in Form einer Zahnrolle eine Zahnriemenscheibe (30) zum Antrieb des Zahnriemens (29), wobei die Riemenscheibe (30) eine mittige Bohrung vom Typ mit Facetten umfasst, um mit einer Antriebswelle (45) mit geeignetem Querschnitt und insbesondere einer ausziehbaren Antriebswelle (45) zu kooperieren, die es ermöglicht, jedes Fördermodul (9) beliebig nach Bedarf zu demontieren und auszuwechseln.

## Claims

1. Installation for preparing batches of bottle-type or other products, said installation comprising:
- an upstream conveyor (2) which supplies lines of products (3), and a conveying system located downstream comprising a downstream preparation conveyor (4) topped with a conveyor system (14) with bars (15);
- a unit (5) for regulating the flow of products (3), placed between said upstream conveyor (2) and said downstream conveyor (4), said regulating unit comprising passages for each line of products (3), each passage being delimited by walls (16) which are guided on rails (36, 37) arranged transversely, and, in each passage, an endless belt type of conveying module (9) and sets of mobile regulating fingers (8) for controlling the speed at which said products (3) advance, said sets of fingers (8) being divided into two interleaved families controlled separately by appropriate drive elements to allow adjusting the distance separating said consecutive sets of fingers (8) and to define the position of said products, a support (39) which can be guided transversely being associated with each of the conveying modules (9),
**characterized in that** the endless belt of each conveying module (9) extends all the way to the inlet of said downstream conveyor (4), **in that** control means are provided for separately adjusting the speed of each of the two families of sets of regulating fingers (8) and for adjusting, in particular, the speed of said downstream conveyor (4), so as to achieve two ungrouping modes for said products, and **in that** each of the supports (39) is guided by one of the rails (36,37).

2. Installation according to claim 1, wherein each conveying module (9) comprises a first "sabre" roller (27), the endless belt of each conveying module (9) winding over the first "sabre" roller (27) of the same module (9) and the belt of the downstream conveyor (4) winding over a second "sabre" roller (28), so as to limit the risk of destabilizing and unbalancing the products (3) as they pass from said endless belt to said belt of said downstream conveyor.

3. Installation according to claim 2, wherein the endless belt of each conveying module (9) is in the form of a notched belt (29), said notched belt (29) being driven by a pulley (30) that is also notched in order to guarantee the speed Vc at which the products (3) advance when, in one of the ungrouping modes, they are released by the corresponding set of fingers (8), in the downstream portion of the passages of the regulating unit (5).

4. Installation according to claim 3, wherein said first "sabre" roller (27), located at the downstream end of the conveying module (9), consists of a notched roller of small diameter, said diameter being on the order of 10 to 15 mm, offering an overall radius, including the belt (29), which is on the order of 7 mm.

5. Installation for preparing batches of products according to any of the above claims, comprising, in each conveying module (9), an endless belt driven by a servomotor (33) able to set multiple advancement speeds according to the intended ungrouping mode, and in particular:
- in an ungrouping mode referred to as SRF, a speed Vc equal to the speed of the set of regulating fingers (8) which when active is in a product retention position, and less than the speed Va of the downstream conveyor (4), said downstream conveyor (4) performing the separation of the rows of products and a cycling system (14) with bars (15) performing the grouping, if there is such, of said rows to form said batch of products,
- or, in the other ungrouping mode referred to as SAF, a speed Vc greater than the speed Vd of the sets of regulating fingers (8), and substantially equal to the speed Va of said downstream conveyor (4), in order to perform the separation of the batches which are delimited by the endless belt of said conveying module (9), directly in the passages of the regulating unit (5).

6. Installation according to any of the above claims, wherein each conveying module (9) comprises, upstream from its endless belt, a fixed plane, or dead plate (10), establishing the connection between the downstream end of the upstream conveyor (2) and said endless belt.

7. Installation according to any of the above claims, comprising, in the regulating unit (5), two families (d1, d2) of sets of fingers (8) each comprising two sets of fingers (8), and each set of fingers (8) being installed on a crosspiece (35), said crosspieces (35) being attached at their ends to drive means in the form of endless chains (18) extending between sprockets (19), said sprockets (19) being mounted on two horizontal shafts (20, 21) spaced horizontally apart from each other and arranged transversely, and each shaft comprising its own drive system for driving its family of sets of fingers (8), said drive elements, of the servomotor type (22, 23), being actuated by means of a programmable logic controller (34) with a program which takes into account the size of the products and the mode of product batch preparation in order to achieve, on the one hand, a phase difference between the two families of sets of fingers (8) so as to accommodate the dimensions of the products as well as the dimensions of the batches of products, and on the other hand, to adjust the speed at which said sets of fingers (8) advance in order to have this advancement speed correspond to the speeds required for each of the ungrouping modes for these products, namely the SRF mode or the SAF mode.

8. Installation according to any of the above claims, wherein each conveying module (9) comprises a long and slender frame consisting of side walls (42) and crosspieces (43), said frame being equipped, at each of its ends, with a base (48) which is arranged between said side walls (42), each base (48) cooperating with a centering and positioning pin (49) which is installed on a support (39) arranged at the corresponding end of the regulating unit (5).

9. Installation according to claim 1, wherein said rail (37) passes through a borehole (50) in the support (39).

10. Installation according to any of the above claims, wherein the endless belt of each conveying module (9) winds over a first "sabre" roller (27) of the same module (9), each module (9) having an end, adjacent to the inlet to said downstream conveyor (4), which comprises said first "sabre" roller of the same module and where the endless belt winds in a 180° turn.

11. Conveying module for an installation for preparing batches of products according to any of claims 1 to 11, comprising a long and slender frame supporting an endless belt in the form of a notched belt (29) and a dead plate (10), said belt (29) winding, at the end opposite said dead plate (10), over a "sabre" roller (27) in the form of a notched roller of small diameter, on the order of 10 to 15 mm.

12. Conveying module according to claim 11, comprising, on the side of the "sabre" roller (27) in the form of a notched roller, a notched pulley (30) for driving the notched belt (29), said pulley (30) comprising a central borehole having a multi-sided shape that cooperates with a drive shaft (45) having an appropriate cross-section and in particular a removable drive shaft (45) which allows disassembling and changing each conveying module (9) as desired and as needed.
